Europäisches Patentamt

European Patent Office

Office européen des brevets

(19)

(11) Veröffentlichungsnummer: **0 209 708**
**B1**

(12) **EUROPÄISCHE PATENTSCHRIFT**

(45) Veröffentlichungstag der Patentschrift: **22.11.90**

(21) Anmeldenummer: **86107973.9**

(22) Anmeldetag: **11.06.86**

(51) Int. Cl.⁵: **F 02 F 11/00,** F 16 J 15/12, F 02 B 19/14

(54) **Zylinderkopfdichtung für Verbrennungskraftmaschinen mit in den Zylinderkopf eingebauter Vorverbrennungskammer.**

(30) Priorität: **26.07.85 DE 3526818**

(43) Veröffentlichungstag der Anmeldung:
**28.01.87 Patentblatt 87/05**

(45) Bekanntmachung des Hinweises auf die Patenterteilung:
**22.11.90 Patentblatt 90/47**

(84) Benannte Vertragsstaaten:
**DE FR GB IT SE**

(56) Entgegenhaltungen:
**EP-A-0 082 090**
**US-A-4 254 963**
**US-A-4 397 472**
**US-A-4 519 619**

(73) Patentinhaber: **GOETZE AG**
**Bürgermeister-Schmidt-Strasse 17**
**D-5093 Burscheid 1 (DE)**

(72) Erfinder: **Beyer, Horst, Dr.**
**Finkenweg 12**
**D-5093 Burscheid (DE)**
Erfinder: **Maus, Karl-Heinz, Dipl.-Ing.**
**Am Oberst 19**
**D-5600 Wuppertal 11 (DE)**

Courier Press, Leamington Spa, England.

EP 0 209 708 B1

## Beschreibung

Die Erfindung betrifft eine Brennkraftmaschine mit Zylinderkopf mit in den Zylinderkopf eingebauter Vorverbrennungskammer und einer Zylinderkopfdichtung, wobei die Vorverbrennungskammer mit einem Teil ihrer Bodenfläche auf der Zylinderkopfdichtung aufliegt.

Zur besseren Durchmischung und damit zur besseren Verbrennung des Kraftstoffluftgemisches ist es insbesondere bei Dieselmotoren bekannt, dem eigentlichen Hauptverbrennungsraum eine Vorverbrennungskammer, Nebenkammer, Wirbelkammer oder Ricardokammer vorzuschalten. Solche Kammern müssen aus hochtemperaturfesten Materialien, wie Metallen oder auch Sinterkeramik, wie bevorzugt aus gesintertem Siliziumnitrid, gefertigt werden, und sie sind als separates Bauteil in eine entsprechende Ausnehmung des Zylinderkopfes eingesetzt. Die eingesetzten Vorverbrennungskammern liegen mit einem Teil ihrer Bodenfläche auf der Zylinderkopfdichtung auf, so daß die Vorverbrennungskammer vor dem Herausfallen aus dem Zylinderkopf gehindert wird und eine Abdichtung des Hauptverbrennungsraumes erfolgt.

Während des motorischen Betriebes erfolgt in der Vorverbrennungskammer eine starke Wärmeentwicklung, und die Bodenfläche der Kammer wird entsprechend stark aufgeheizt. Die Zylinderkopfdichtung muß daher im Auflagebereich der Kammer besonders geschützt werden.

Nach der DE-PS 28 56 186 werden daher beispielsweise die Schenkel der metallischen Einfassungsbleche im Bereich der aufliegenden Kammer lappenartig erweitert.

Nach beispielsweise der DE-PS 30 11 216 sind in der Zylinderkopfdichtung am Brennraumrand Aussparungen vorgesehen, so daß die Vorverbrennungskammer lediglich mit einer äußeren und weniger erhitzten Randzone auf der Zylinderkopfdichtung auf der metallischen Einfassung aufliegt.

Nach der US-PS 4 311 318 und der US-PS 4 400 000 umgibt den Brennraumrand ein metallischer Feuerring, der mit einer Einfassung an der Dichtung befestigt ist. Der Bereich der Bodenfläche der Vorverbrennungskammer ist in der Dichtungsplatte ausgespart, so daß die Vorverbrennungskammer mit der Bodenfläche in einer Randzone auf der Zylinderkopfdichtung und auf dem Feuerring aufliegt.

Die Abdichtung der Vorverbrennumgskammern bereitet jedoch häufig Probleme. So können die auf den Einfassungsschenkeln beziehungsweise den lappenförmigen Verbreiterungen der Einfassungsschenkel aufliegenden, stark erhitzten Vorverbrennungskammern durch thermische Ausdehnungskräfte die Einfassung überbeanspruchen, und es kommt zu einem Dichtpressungsabfall mit nachfolgenden Gasleckagen. Insbesondere bei Verwendung von Vorverbrennungskammern aus modernen keramischen Werkstoffen ist wegen der gegenüber metallischen Vorverbrennungskammern weiter gestiegenen Temperaturen die Abdichtung noch schwieriger zu beherrschen.

Zusätzlich sind keramische Vorverbrennungskammern relativ spröde und zerbrechlich. Bei zu hohen Dichtpressungsdrücken besteht dann die Gefahr von Kammerbrüchen, so daß mit ungewöhnlich geringen Dichtpressungsdrücken abgedichtet werden muß.

Bei Zylinderkopfdichtungen, bei denen der Brennraumrand im Bereich der aufliegenden Vorverbrennungskammer Aussparungen besitzt, ist zugleich ein schädlicher freier Raum zum Brennraum entstanden.

Der vorliegenden Erfindung liegt daher die Aufgabe zugrunde, eine Brennkraftmaschine gemäß Oberbegriff des Hauptpatentanspruches zu schaffen, bei der die aufgezeigten Nachteile beseitigt sind.

Erfindungsgemäß wird diese Aufgabe durch eine Brennkraftmaschine gemäß kennzeichnendem Teil des Hauptpatentanspruches gelöst.

Bevorzugt besteht der Auflagebereich für die Vorverbrennungskammer aus einem hochtemperaturbeständigen Material mit guter plastischer Verformungsfähigkeit und gutem Warmsetzverhalten, und das Material ist in die entsprechende Ausnehmung der Dichtung am öffnungsrand als segmentförmige Platte von etwa der Dicke der Dichtung eingesetzt. Die verwendeten Materialien bestehen bevorzugt aus expandiertem Foliengraphit mit oder ohne Trägerblech, weich geglühtem Kupferblech oder einem hochtemperaturbeständigen Faservlies auf Keramikfaserbasis.

Die Vorverbrennungskammer liegt jetzt mit ihrer Bodenfläche auf dem eingelegten Material teilweise auf und wird wirkungsvoll vor dem Herausfallen aus dem Zylinderkopf geschützt. Gleichzeitig erfolgt zwischen der Bodenfläche der Kammer und dem Auflagematerial aufgrund dessen leichter plastischer Verformbarkeit eine optimale Abdichtung schon bei außergewöhnlich geringen Dichtpressungsdrücken. Keramische Vorverbrennungskammern sind so vor einem Zerbrechen während des Einbaues wirkungsvoll geschützt.

Im Sinne der Erfindung ist es jedoch auch möglich, die Auflagefläche der Vorverbrennungskammer auf der Zylinderkopfdichtung auf eine äußere und damit weniger stark erhitzte schmale Randzone der Zylinderkopfdichtung zu beschränken. Die entsprechende Fläche am Brennraumrand der Zylinderkopfdichtung ist dann ausgespart und mit einem plattenförmigen Element aus hochtemperaturbeständigem Material, wie aus einer hochwarmfesten Stahl- oder Nickellegierung aus Keramik, gekapseltem Graphit oder dergleichen, ausgefüllt. Das plattenförmige Element selbst bildet dann keine Auflage für die Kammer und übernimmt allenfalls die Funktion einer Labyrinthdichtung. Das Vorlageelement ist bevorzugt mit dem Dichtungsrand formschlüssig in Aussparungen der Dichtung durch Kleben, Löten, Punktschweißen oder durch Einbördeln befestigt.

Durch die Erfindung ist somit eine Zylinderkopfdichtung geschaffen, bei der die Überhitzung der aus der Einfassung gebildeten Auflage für die Vorverbrennungskammer und somit ein Undichtwerden durch thermische Ausdehnungen verhindert werden. Vor allem dann, wenn die Auflage für die Kammer aus plastisch leicht verformbarem Material gebildet ist, kann mit geringem Dichtpressungsdruck und damit ohne Gefahr des Zerbrechens einer keramischen Kammer optimal abgedichtet werden. Der schädliche Totraum zwischen Brennraumöffnung und Dichtungsrand ist zugleich durch die Vorlageplatte ausgefüllt.

Die Erfindung wird anhand der Abbildungen näher erläutert. und zwar zeigen:

Figur 1 den Querschnitt durch eine zwischen Zylinderblock und Zylinderkopf eingebaute Zylinderkopfdichtung mit auf hochtemperaturfestem Material aufliegender Vorverbrennungskammer

Figur 2 eine Zylinderkopfdichtung mit einer hochtemperaturfesten Auflage für die Vorverbrennungskammer in Aufsicht

Figur 3 ein Aufsichtsbild einer weiteren Zylinderkopfdichtung gemäß der Erfindung

Figur 4 die Zylinderkopfdichtung der Figur 3 im Querschnitt in der Schnittlinie A—B

Figur 5 ein Querschnittsbild einer weiteren Zylinderkopfdichtung gemäß der Erfindung

Figur 6 ein Querschnittsbild einer weiteren Zylinderkopfdichtung gemäß der Erfindung Figur 7 ein Querschnittsbild einer weiteren Zylinderkopfdichtung gemäß der Erfindung.

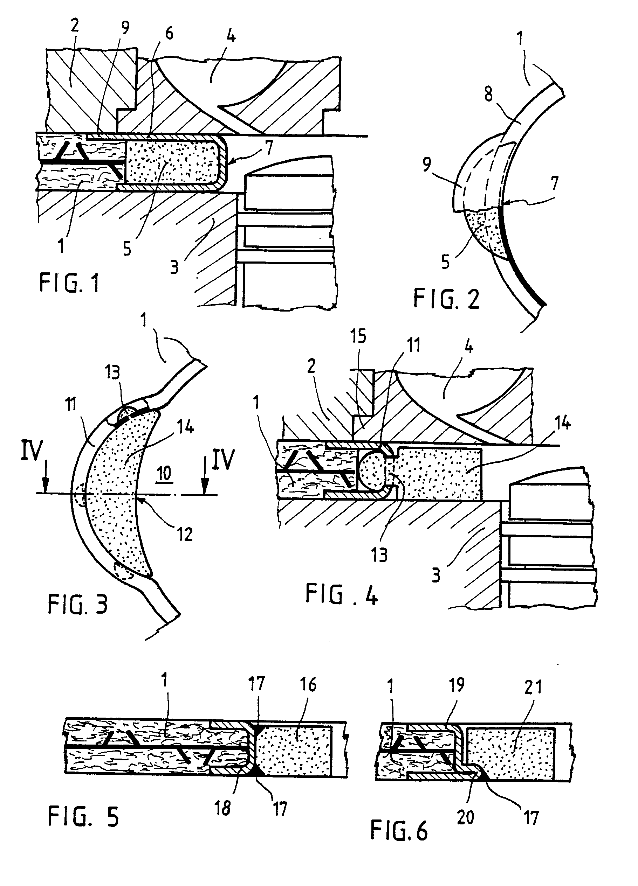

In Figur 1 ist (1) die Zylinderkopfdichtung, welche zwischen Zylinderkopf (2) und Motorblock (3) eingebaut ist. Die in den Zylinderkopf (2) eingebaute Vorverbrennungskammer (4) liegt auf der Vorlage (5) abdichtend auf. Die Vorlage (5) besteht aus metallisch verstärktem Material aus expandiertem Graphit und ist von einem Einfassungsblech (6) überdeckt.

Die Figur 2 zeigt den Brennraumrand (7) der Zylinderkopfdichtung (1) im Bereich der aufliegenden Vorverbrennungskammer (4). Der metallische Einfassungsschenkel (8) am Brennraumrand (7) ist im Bereich der aufliegenden Vorverbrennungskammer lappenartig (9) erweitert und befestigt die darunterliegende Vorlage (5) aus expandiertem Graphit an der Dichtung (1).

Im Aufsichtsbild der Figur 3 ist der Raum (12) zwischen Brennraum (10) und Einfassung (11) ausgespart, und der Raum (12) ist mit einem hochtemperaturfesten Vorlagematerial (14) ausgefüllt. Die am Umfang der Einfassung (11) verteilten Aussparungen (13) dienen der Befestigung der Vorlage (14).

Im Querschnittsbild der Figur 4 in der Schnittlinie IV—IV der Figur 3 liegt die Vorverbrennungskammer (4) mit einem radialen Vorsprung (15) auf der Einfassung (11) auf. Zwischen Einfassung (11) und Vorsprung (15) ist die Vorlage (14) angeordnet, welche jedoch keine Abdichtung zur Vorverbrennungskammer (4) bildet. Die Vorlage (14) ist in der Aussparung (13) mit der Dichtung (1) formschlüssig verbunden.

Im Querschnittsbild der Figur 5 ist das hochtemperaturfeste Vorlagematerial (16) durch Punktschweißen (17) mit der Einfassung (18) der Dichtung (1) verbunden.

In Figur 6 bildet die Einfassung (19) der Dichtung (1) einen Vorsprung (20), mit welchem die Vorlage (21) aus hochwarmfestem Material durch Punktschweißen (17) verbunden ist.

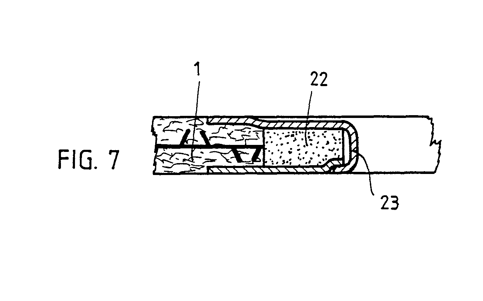

In Figur 7 ist das Vorlagesegment (22) an der Dichtung (1) mit einem Einfassungslappen (23) befestigt.

## Patentansprüche

1. Brennkraftmaschine mit Zylinderkopf (2) mit in den Zylinderkopf (2) eingebauter Vorverbrennungskammer (4) und einer Zylinderkopfdichtung (1), wobei die Vorverbrennungskammer (4) mit einem Teil ihrer Bodenfläche auf der Zylinderkopfdichtung (1) aufliegt, dadurch gekennzeichnet, daß der zwischen der Bodenfläche der Vorverbrennungskammer (4) und dem Motorblock liegende Bereich der Zylinderkopfdichtung (1) vollständig aus einem Material (5, 14, 16, 21, 22) mit einer gegenüber dem übrigen Material der Zylinderkopfdichtung (1) höheren Temperaturfestigkeit besteht.

2. Brennkraftmaschine nach Anspruch 1, dadurch gekennzeichnet, daß das temperaturfeste Material (5, 14, 16, 21, 22) Plastisch verformbar ist.

3. Brennkraftmaschine nach den Ansprüchen 1 und 2, dadurch gekennzeichnet, daß das temperaturfeste Material (5) aus expandiertem Graphit und/oder aus einem weich geglühten Kupferblech besteht.

4. Brennkraftmaschine nach den Ansprüchen 1 bis 3, dadurch gekennzeichnet, daß das temperaturfeste Material (5) mit einem Einfassungslappen (6) an der Dichtung (1) befestigt ist.

5. Brennkraftmaschine nach Anspruch 1, dadurch gekennzeichnet, daß in der Zylinderkopfdichtung (1) der Raum entsprechend der Bodenfläche der Vorverbrennungskammer (4) ausgespart ist, daß die Vorverbrennungskammer (4) mit ihrer äußeren Randzone auf der Einfassung (11, 19) am Dichtungsrand aufliegt, und daß der freie Raum (12) zwischen Dichtungsrand und Brennraum (10) mit einem nicht dichtenden Vorlagesegment (14, 16, 21) aus höher temperaturfestem Material ausgefüllt ist.

6. Brennkraftmaschine nach Anspruch 5, dadurch gekennzeichnet, daß das Vorlagesegment (14, 16, 21) formschlüssig durch Kleben, Löten oder durch Punktschweißen am Einfassungsrand (11, 19, 20) befestigt ist.

7. Brennkraftmaschine nach den Ansprüchen 5 und 6, dadurch gekennzeichnet, daß das Vorlagesegment (14, 16, 21) aus einer hochwarmfesten Nickellegierung oder Stahllegierung, aus Keramik oder aus gekapseltem Graphit besteht.

## Revendications

1. Moteur à combustion interne avec culasse (2) avec chambre (4) de préconbustion intégrée à la culasse (2) ainsi qu'avec un dispositif d'étanchéité (1) de culasse, dans lequel une partie de sa surface de base repose sur le dispositif d'étanchéité (1) de culasse, caractérisé en ce que la zone du dispositif d'étanchéité (1) de culasse se trouvant entre la surface de base de la chambre de précombustion (4) et le bloc moteur est complètement constitué par un matériau (5, 14, 16, 21, 22) ayant une résistance aux fortes températures supérieure à celle du matériau utilisé par ailleurs pour le dispositif d'étanchéité (1) de culasse.

2. Moteur à combustion interne selon la revendication 1, caractérisé en ce que le matériau résistant aux fortes températures (5, 14, 16, 21, 22) est déformable plastiquement.

3. Moteur à combustion interne selon les revendications 1 et 2, caractérisé en ce que le matériau (5) résistant aux fortes températures est du graphite expansé et/ou une tôle de cuivre légèrement recuit.

4. Moteur à combustion interne selon les revendications 1 à 3, caractérisé en ce que le matériau (5) résistant aux fortes températures est assujetti au dispositif d'étanchéité (1) avec une agrafe de bordure (6).

5. Moteur à combustion interne selon la revendication 1, caractérisé en ce que l'espace correspondant à la surface de base de la chambre de précombustion (4) est évidé dans le dispositif d'étanchéité (1) de culasse; en ce que la chambre de précombustion (4) repose sur la bordure (11, 19) le long de la zone périphérique extérieure au niveau du dispositif d'étanchéité; en ce que l'espace (12) libre entre le bord du dispositif d'étanchéité et l'espace de combustion (10) est rempli d'un segment de support (14, 16, 21) en matériau résistant aux fortes températures et n'assurant pas l'étanchéité.

6. Moteur à combustion interne selon la revendication 5, caractérisé en ce que le segment d'appui (14, 16, 21) est assujetti mécaniquement à la périphérie de la bordure par collage, brasage ou par soudure ponctuelle.

7. Moteur à combustion interne selon les revendications 5 et 6, caractérisé en ce que le segment d'appui (14, 16, 21) est fait d'un alliage à base de nickel ou d'acier résistant aux fortes températures, de céramique ou de graphite étanche.

**Claims**

1. Internal combustion engine with a cylinder head (2) with a precombustion chamber (4) built into the cylinder head (2) and a cylinder head gasket (1), wherein the precombustion chamber (4) rests with a portion of its bottom surface on the cylinder head gasket (1), characterised in that the region of the cylinder head gasket (1) located between the bottom surface of the precombustion chamber (4) and the engine block is made entirely of a material (5, 14, 16, 21. 22) with a higher temperature resistance than the remaining material of the cylinder head gasket (1).

2. Internal combustion engine according to claim 1, characterised in that the temperature-resistant material (5, 14, 16, 21, 22) is plastically deformable.

3. Internal combustion engine according to claims 1 and 2, characterised in that the temperature-resistant material (5) consists of expanded graphite and/or a soft annealed copper sheet.

4. Internal combustion engine according to claims 1 to 3, characterised in that the temperature-resistant material (5) is attached to the gasket (1) with a rim tab (6).

5. Internal combustion engine according to claim 1, characterised in that in the cylinder head gasket (1) the space corresponding to the bottom surface of the precombustion chamber (4) is hollowed out, that the precombustion chamber (4) rests with its outer edge zone on the rim (11, 19) at the gasket edge, and that the face space (12) between gasket edge and combustion chamber (10) is filled with a non-sealing insert segment (14, 16, 21) of higher temperature-resistant material.

6. Internal combustion engine according to claim 5, characterised in that the insert segment (14, 16, 21) is attached to the rim edge (11, 19, 20) in form-fitting relationship by adhesion, soldering or spot welding.

7. Internal combustion engine according to claims 5 and 6, characterised in that the insert segment (14, 16, 21) is made of a highly refractory nickel alloy or steel alloy, ceramics or encapsulated graphite.

FIG. 1

FIG. 2

FIG. 3

FIG . 4

FIG. 5

FIG. 6

FIG. 7